(19) Europäisches Patentamt
European Patent Office
Office européen des brevets

(11) **EP 3 924 670 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **20707185.3**

(22) Anmeldetag: **07.02.2020**

(51) Internationale Patentklassifikation (IPC):
**F24D 19/10** *(2006.01)* **F04D 15/00** *(2006.01)*

(52) Gemeinsame Patentklassifikation (CPC):
**F24D 19/1012; F04D 15/0066; F04D 15/0088;**
F24D 2220/0207; Y02B 30/70

(86) Internationale Anmeldenummer:
**PCT/EP2020/053109**

(87) Internationale Veröffentlichungsnummer:
**WO 2020/165037 (20.08.2020 Gazette 2020/34)**

(54) **VERFAHREN ZUR REGELUNG EINER UMWÄLZPUMPE UND UMWÄLZPUMPE**

METHOD FOR CONTROLLING A CIRCULATION PUMP AND CIRCULATION PUMP

PROCÉDÉ POUR RÉGULER UNE POMPE DE CIRCULATION ET POMPE DE CIRCULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2019 DE 102019001119**

(43) Veröffentlichungstag der Anmeldung:
**22.12.2021 Patentblatt 2021/51**

(73) Patentinhaber: **KSB SE & Co. KGaA**
**67227 Frankenthal (DE)**

(72) Erfinder:
• **ECKL, Martin**
**67227 Frankenthal (DE)**
• **LAUE, Stefan**
**67227 Frankenthal (DE)**
• **SCHULLERER, Joachim**
**76764 Rheinzabern (DE)**

(56) Entgegenhaltungen:
EP-A1- 1 323 986 WO-A1-03/023288
DE-A1- 102017 203 474 DE-A1- 19 525 887

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Regelung einer Umwälzpumpe mit variabler Drehzahl in einer hydraulischen Anlage, insbesondere in einer Heizungsanlage, sowie eine Umwälzpumpe, insbesondere Heizungsumwälzpumpe, zur Durchführung des Verfahrens.

Ältere Heizungsumwälzpumpen, insbesondere für Heizungsanlagen kleiner oder mittlerer Leistung, sind oftmals ungeregelt, d.h. deren Leistung muss manuell auf die jeweilige Leistungsanforderung der Heizungsanlage eingestellt werden. Die Pumpe bietet hierzu unterschiedliche Leistungsstufen zur manuellen Auswahl an. Erfolgt keine manuelle Anpassung der Leistungsstufe innerhalb der Heizungsanlage, muss eine ausreichend hohe Leistungsstufe ausgewählt werden, die auch in Zeiten auftretender Leistungsspitzen einen ausreichenden Förderstrom zur Verfügung stellen kann. Da diese Leistungsspitzen nur kurzzeitig auftreten, läuft die Pumpe überwiegend in einem energetisch ungünstigen Betrieb.

Aufgrund strenger werdender Energieeffizienzanforderungen sind moderne Umwälzpumpen mit Umrichter und Drehzahlregler ausgestattet, die eine Einstellung der Drehzahl anhand einer Regelkurve ermöglichen. Die Pumpe ermittelt dabei anhand eines Schätzalgorithmus ihren aktuell vorliegenden Förderstrom und ihre Förderhöhe und stellt die Drehzahl derart ein, dass der Betriebspunkt sich nur entlang der jeweiligen Regelkurve verschieben kann.

Die EP 1 323 986 A1 zeigt ein Verfahren zum Steuern einer drehzahlregelbaren Heizungsumwälzpumpe, bei dem die Drehzahl der Pumpe längs einer Regelkurve veränderbar ist. In der DE 195 25 887 A1 wird ein Verfahren zur Anpassung des hydraulischen Leistungsfeldes eines Kreiselpumpenaggregates an die Erfordernisse einer Heizungsanlage beschrieben.

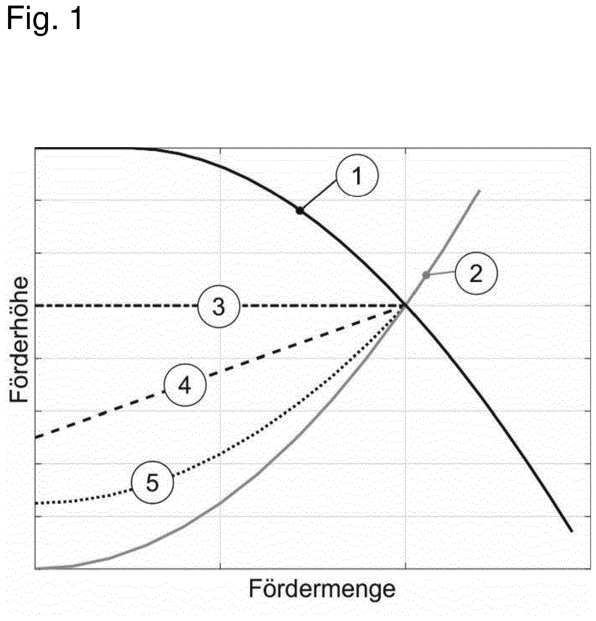

In Figur 1 sind Regelkurven 3, 4, 5 für drei unterschiedliche Regelstrategien der Pumpe dargestellt. Bei einer Konstantdruckregelung gemäß der Regelkurve 3 regelt die Pumpe die Drehzahl unabhängig vom Förderstrom so, dass immer eine konstante Förderhöhe vorliegt. Bei einer Proportionaldruckregelung gemäß der Regelkurve 4 wird die Förderhöhe entlang einer Geraden immer proportional zum Förderstrom eingestellt. Im Eco-Mode mit der Regelkurve 5 verhält es sich ähnlich wie bei der Proportionaldruckregelung, nur dass hier die Regelkurve eine quadratische Funktion (Parabel) darstellt. Die Kurve 1 kennzeichnet den maximalen Betriebsbereich der Pumpe.

Die Kurvencharakteristik und der Endwert der für den Pumpenbetrieb ausgewählten Regelkurve müssen üblicherweise vom Anwender vor Betriebsaufnahme eingestellt werden. Für einen energetisch günstigen Betrieb sollte die Regelkurve immer knapp oberhalb der minimalen Anlagenkennlinie 2 gemäß Figur 1 liegen. Die Anlagenkennlinie entspricht dem Rohrleitungswiderstand des Hydrauliksystems und ändert sich mit dem Öffnungsgrad der Thermostatventile der einzelnen Heizkörper, wobei sich die minimale Anlagenkennlinie dann einstellt, wenn alle Thermostatventile vollständig geöffnet sind. Der aktuelle Betriebspunkt der Pumpe ergibt sich durch den Schnittpunkt zwischen der angewandten Regelkurve der Pumpe und der aktuellen realen Anlagenkennlinie. Liegt die Regelkurve unter der realen minimalen Anlagenkennlinie, so werden die Heizkörper den Raum nicht ausreichend mit Wärme versorgen können. Liegt die Regelkurve hingegen deutlich über der realen minimalen Anlagenkennlinie, so schließen die Thermostatventile und die Pumpe verbraucht mehr Energie als eigentlich erforderlich wäre.

Die Schwierigkeit bei dieser Vorgehensweise besteht darin, dass die reale minimale Anlagenkennlinie oftmals unbekannt ist oder nur grob abgeschätzt werden kann. In der Praxis wird daher häufig auf eine proportionale oder parabelförmige Regelkennlinie zurückgegriffen, die in ausreichendem bzw. deutlichem Abstand oberhalb einer vom Monteur geschätzten minimalen Anlagenkennlinie liegt, um stets ein ausreichendes Leistungspolster zu haben. Dieser Abstand zwischen Anlagen- und Regelkennlinie ist jedoch ein Kennwert für die überschüssige Leistung der Pumpe und somit für das vorhandene Energieeinsparungspotenzial derartiger Pumpen.

Es wird daher nach einem Verfahren zur Regelung der Umwälzpumpe gesucht, das die oben genannten Probleme ausreichend berücksichtigt und die Energieeffizienz der Pumpe dennoch optimiert.

Gelöst wird diese Aufgabe durch ein Verfahren zur Regelung einer Umwälzpumpe, insbesondere einer Heizungsumwälzpumpe, gemäß den Merkmalen des Anspruchs 1. Vorteilhafte Ausgestaltungen der Erfindung sind Gegenstand der abhängigen Ansprüche.

Erfindungsgemäß wird vorgeschlagen, die Drehzahl der Pumpe auf Grundlage einer in der Pumpensteuerung hinterlegten Regelkurve auszuführen, d.h. die gefahrene Pumpendrehzahl des Pumpenantriebs wird in Abhängigkeit dieser ausgewählten Regelkurve eingestellt. Zur initialen Betriebsaufnahme der Pumpe wird hierfür eine initial geschätzte minimale Anlagenkennlinie in der Pumpensteuerung eingestellt bzw. hinterlegt. Für den weiteren Pumpenbetrieb wird nun erfindungsgemäß vorgeschlagen, dass die Pumpe selbstständig eine neue erwartete minimale Anlagenkennlinie während des regulären Pumpenbetriebs ermittelt, die idealerweise die reale/tatsächliche minimale Anlagenkennlinie besser abbildet als die initiale bzw. zuvor verwendete erwartete minimale Anlagenkennlinie. Nachfolgend wird immer dann von der "erwarteten minimalen Anlagenkennlinie" gesprochen, wenn diese durch die Pumpe selbst während des Pumpenbetriebs ermittelt wurde. Als "reale minimale Anlagenkennlinie" ist stattdessen der tatsächliche, physikalisch vorliegende Anlagenwiderstand bei vollständig geöffneten Ventilen zu verstehen.

Liegt die neu ermittelte erwartete minimale Anlagenkennlinie überwiegend unterhalb der initial geschätzten minimalen Anlagenkennlinie, wird diese als neue erwartete minimale Anlagenkennlinie von der Pumpensteuerung verwendet und die gefahrene Regelkurve wird in Abhängigkeit dieser neuen erwarteten minimalen Anlagenkennlinie angepasst. Liegt die neue erwartete minimale Anlagenkennlinie hingegen oberhalb der bisherigen erwarteten minimalen Anlagenkennlinie, so wird die neue erwartete minimale Anlagenkennlinie vorzugsweise verworfen und die Regelkurve bleibt unverändert. Letzteres muss aber nicht zwingend so sein. Unter Umständen kann zu Korrekturzwecken von Zeit zu Zeit auch dann auf die neue erwartete minimale Anlagenkennlinie für die Anpassung der Regelkurve zurückgegriffen werden, wenn diese über der zuletzt verwendeten erwarteten minimalen Anlagenkennlinie liegt.

Wie bereits einleitend beschrieben wurde, ist für eine energieeffiziente Regelung stets vorgesehen, die Regelkurve möglichst nah an die reale minimale Anlagenkennlinie anzupassen. Durch das erfindungsgemäße Verfahren soll nun im laufenden Betrieb die erwartete minimale Anlagenkennlinie ein oder mehrmals neu ermittelt werden mit dem Hintergrund, diese möglichst nahe an die reale minimale Anlagenkennlinie anzunähern.

Erfindungsgemäß wird die neue erwartete minimale Anlagenkennlinie mit den folgenden auszuführenden Verfahrensschritten bestimmt. Zunächst soll durch die Pumpe ein stationärer Betriebspunkt der Umwälzpumpe erkannt werden. Ein solcher stationärer Betriebspunkt zeichnet sich durch einen über eine bestimmte Zeitdauer im Wesentlichen konstanten Förderstrom ab. Ein stationärer Betriebspunkt wird dann angenommen, wenn die Raumtemperatur in den beheizten Räumen im Wesentlichen konstant bleibt und sich dementsprechend auch ein konstanter Anlagenwiderstand einstellt. In diesem Fall sollte die Pumpe mit einem konstanten Förderstrom arbeiten. Da in der Praxis jedoch auch in einem solchen stationären Betriebszustand gewisse Schwankungen des Förderstroms nicht auszuschliessen sind, wird vorzugsweise ein schmaler Toleranzbereich mit einer Ober- und Untergrenze für den Förderstrom definiert. Liegt der von der Pumpe ermittelte Förderstrom innerhalb dieses Toleranzbereichs, wird ein nahezu konstant bleibender Förderstrom angenommen und die Pumpe geht von einem stationären Betriebspunkt aus.

Die Zeitdauer, über die der Förderstrom nahezu konstant bzw. innerhalb des Toleranzbereichs liegen muss, ist vorzugsweise variabel einstellbar. Denkbar sind Zeiträume zwischen ein und drei Stunden, bspw. etwa zwei Stunden.

Erkennt die Pumpensteuerung einen stationären Betriebspunkt, so wird eine kontinuierliche Absenkung der Pumpendrehzahl bei gleichzeitiger Überwachung des Förderstroms der Pumpe initiiert. Bei einer stationären Anlage würde die Drehzahlabsenkung prinzipiell zu einer Abnahme des Pumpenförderstroms führen. In einer Anlage mit variablen Anlagenwiderstand, insbesondere bei einer Heizungsanlage mit Thermostatventilen, führt diese Maßnahme jedoch dazu, dass die verbauten Thermostatventile der einzelnen Heizkörper den verringerten Förderstrom und den damit einhergehenden geringeren Wärmetransport durch eine kontinuierliche Vergrößerung der Ventilöffnung zu kompensieren versuchen, um dadurch die Temperatur im Raum auf dem gewünschten Sollwert zu halten. Aus diesem Grund bleibt der Förderstrom zunächst konstant.

Da die Drehzahl jedoch weiter abgesenkt wird, werden die Thermostatventile gezwungen vollständig bzw. soweit wie möglich zu öffnen, wodurch sich der Rohrleitungswiderstand der Anlage letztendlich auf ein Minimum reduziert und der vorliegende Anlagenzustand der minimalen Anlagenkennlinie entspricht. Wird in diesem Zustand die Pumpendrehzahl weiter abgesenkt, so kann eine dadurch bedingte Reduzierung des Förderstroms durch den Öffnungsgrad der Ventile nicht mehr ausgeglichen werden und der von der Pumpe bereitgestellte Förderstrom sinkt tatsächlich ab. Durch dieses Absinken des Förderstroms wandert der Betriebspunkt der Pumpe damit auf der minimalen Anlagenkennlinie nach unten. Dieser Effekt wird ausgenutzt, um die erwartete minimale Anlagenkennlinie mathematisch zu berechnen. Sobald die Pumpe einen wesentlichen Abfall des Förderstroms feststellt, wird gleichzeitig der zeitliche Verlauf des Förderstrom und der Förderhöhe über eine bestimmte Zeit aufgezeichnet. Aus dem aufgezeichneten Verlauf der beiden Parameter wird dann rechnerisch die erwartete minimale Anlagenkennlinie berechnet, insbesondere unter Berücksichtigung der Tatsache, dass sich diese naturgemäß durch eine quadratische Funktion beschreiben lässt. Mit diesem Wissen kann anhand der aufgezeichneten Messwerte bzw. Schätzwerte für Förderstrom und Förderhöhe der hydraulische Widerstandsbeiwert bestimmt werden. Sofern die Pumpe entsprechende Sensoren zur Messung der Fördermenge und/oder Förderhöhe aufweist, lassen sich diese für das Verfahren unmittelbar messen. Alternativ kann eine sensorlose Pumpe ihre Förderhöhe und/oder Fördermenge auch mittelbar aus Systemparametern schätzen, bspw. aus der gefahrenen Motordrehzahl bzw. Leistungsaufnahme, usw.. Für die Verfahrensausführung ist es jedoch unerheblich, ob die Werte gemessen oder alternativ geschätzt bzw. berechnet werden.

Idealerweise wird die Drehzahl nur so lange abgesenkt, bis der Förderstrom unterhalb eines vordefinierbaren Grenzwertes absinkt, um dadurch eine zu starke Abnahme der Raumtemperatur zu vermeiden. Beispielsweise wird die Drehzahlverringerung rückgängig gemacht, sobald der Förderstrom außerhalb des bereits vorstehend erläuterten Toleranzbereiches liegt.

Wird mittels der vorgestellten Verfahrensschritte nun eine neue erwartete minimale Anlagenkennlinie ermittelt, die unterhalb der zuletzt verwendeten erwarteten minimalen Anlagenkennlinie liegt, wird diese neu ermittelte minimale Anlagenkennlinie nun dazu herangezogen, die entsprechend gefahrene Regelkurve an die neue erwartete minimale Anlagenkennlinie anzupassen.

Liegt die neu ermittelte Anlagenkennlinie hingegen oberhalb der zuvor verwendeten minimalen Anlagenkennlinie, kann diese stattdessen verworfen werden und die bisher angewandte Regelkurve bleibt unverändert. Letzteres muss aber nicht zwingend so sein.

Gemäß einer vorteilhaften Ausführungsform kommt es zu einer wiederholenden Ermittlung der erwarteten minimalen Anlagenkennlinie während des regulären Pumpenbetriebs. Dies kann beispielsweise periodisch aber auch zufällig erfolgen. Denkbar ist auch eine situationsgetriggerte Ermittlung der erwarteten minimalen Anlagenkennlinie, so beispielsweise für den Fall, dass die Steuerung die tatsächlichen Betriebsbedingungen der Pumpe erfasst und diese für die Ermittlung der minimalen Anlagenkennlinie als geeignet beurteilt. Beispielsweise ist eine sinnvolle Ermittlung der minimalen Anlagenkennlinie nur während einer Heizperiode möglich. Das Vorliegen einer Heizperiode kann die Pumpe bspw. anhand der Mediumtemperatur erkennen, denn diese wird bekanntermaßen in Abhängigkeit der Aussentemperatur durch die Heizungsanlage passend eingestellt. Die Pumpe kann die Temperatur selbständig erfassen oder von der Anlagensteuerung abfragen.

Die Anpassung bzw. Einstellung der Regelkurve erfolgt gemäß einer weiterhin vorteilhaften Ausführungsform der Erfindung in Abhängigkeit der erwarteten minimalen als auch einer erwarteten maximalen Anlagenkennlinie. Auch die erwartete maximale Anlagenkennlinie kann durch die Pumpe selbst bestimmt werden. Dazu erhöht die Pumpe ihre Drehzahl auf ihre Maximaldrehzahl bzw. eine sehr hohe Drehzahl und beobachtet währenddessen den sich einstellenden Förderstrom. Naturgemäß wird dieser zunächst ansteigen und schlussendlich einen nahezu konstanten Wert annehmen. Bleibt dieser Wert über einen bestimmten Zeitraum im Wesentlichen stabil, so kann davon ausgegangen werden, dass sämtliche Heizungsventile der Heizungsanlage geschlossen sind und die Anlage durch die maximale Anlagenkennlinie charakterisiert ist. In diesem Zustand ermittelt die Pumpe den aktuellen Förderstrom und die dazugehörige Förderhöhe. Unter Rückgriff auf dieses Wertepaar und mit dem Wissen, dass auch die maximale Anlagenkennlinie durch eine quadratische Funktion ausgedrückt wird, kann nun die erwartete maximale Anlagenkennlinie hinreichend genau bestimmt werden.

Die Bestimmung oder Anpassung der Regelkurve erfolgt auf Grundlage bestimmter Kurvenparameter sowie der erwarteten minimalen und gegebenenfalls erwarteten maximalen Anlagenkennlinie. Die Kurvenparameter können entweder fest in der Pumpensteuerung hinterlegt sein oder wahlweise durch den Benutzer anpassbar sein.

Ein Kurvenparameter betrifft vorzugsweise die Betriebsart, d.h. Regelstrategie. Diese beschreibt die grundlegende Kurvencharakteristik, bspw. ob die Regelkurve einen geraden Verlauf mit proportionaler Steigung oder alternativ einen quadratischen oder exponentiell ansteigenden Verlauf aufweist.

Als weitere Kurvenparameter können der Start- und/oder Endpunkt der Regelkurve definiert werden. Der Endpunkt der Regelkurve wird vorzugsweise durch den Schnittpunkt der Pumpenkurve bei maximaler Drehzahl mit einer vom Nutzer einstellbaren theoretischen Anlagenkennlinie definiert. Demzufolge orientiert sich die Regelkurve an dieser theoretischen Anlagenkennlinie. Die theoretische Anlagenkennlinie wird wiederum in Abhängigkeit der erwarteten minimalen und gegebenenfalls erwarteten maximalen Anlagenkennlinie bestimmt. Durch die Verwendung der theoretischen Anlagenkennlinie für die Pumpenregelung kann somit eine einstellbare Abweichung von der erwarteten minimalen bzw. erwarteten maximalen Anlagenkennlinie ermöglicht werden. Insbesondere kann ein Abstand definiert und durch den Nutzer einstellbar sein, den die theoretische Anlagenkennlinie von der erwarteten minimalen und/oder erwarteten maximalen Anlagenkennlinie haben soll. Definiert der Nutzer bspw. einen minimalen Abstand zur erwarteten minimalen Anlagenkennlinie, so wird als theoretische Anlagenkennlinie die ermittelte erwartete minimale Anlagenkennlinie herangezogen und die Regelkurve an diese erwartete minimale Anlagenkennlinie angepasst. Die Pumpe wird demzufolge mit der kleinstmöglichen Regelkurve gefahren. Dies bietet zwar die größtmögliche Pumpeneffizienz, geht aber mit einer hohen Gefahr einer Unterversorgung einher.

Wird der größtmögliche Abstand zur minimalen Anlagenkennlinie gewählt, wird die maximale Regelkurve eingestellt und die Gefahr einer Unterversorgung nahezu ausgeschlossen, dies natürlich auf Kosten der Energieeffizienz.

Denkbar ist es, dass der Nutzer den Abstand im Verhältnis zur erwarteten minimalen und erwarteten maximalen Anlagenkurve angeben kann, d.h. bei 50% liegt die theoretische Anlagenkennlinie mittig zwischen ermittelter erwarteter minimaler und erwarteter maximaler Anlagenkennlinie, während die theoretische Anlagenkennlinie bei 0% auf die erwartete minimale Anlagenkennlinie fällt.

In einer vorteilhaften Weiterbildung des Verfahrens wird der Endpunkt nicht durch den vorgenannten Schnittpunkt der beiden Kurven festgelegt, sondern der Endpunkt definiert sich stattdessen durch einen spezifischen Kurvenpunkt einer vom Nutzer einstellbaren theoretischen Anlagenkennlinie. Und zwar wird hier als Endpunkt der Kurvenpunkt im Bereich eines bestimmten Wertes des Förderstroms angenommen, nämlich im Bereich des maximalen Förderstroms, der in der hydraulischen Anlage erreicht werden kann.

Auch hier kann der Nutzer mittels der theoretischen Anlagenkennlinie den gewünschten Abstand zur ermittelten erwarteten minimalen und/oder erwarteten maximalen Anlagenkennlinie einstellen. Ist der Pumpe aber der maximal mögliche Förderstrom innerhalb der Anlage bekannt, ist es zweckmäßig diesen für die Definition des Endpunktes heranzuziehen anstatt hier von der Pumpenkennlinie auszugehen. Dies ermöglicht eine bessere Anpassung der Regelkurve an die eingestellte theoretische Anlagenkennlinie. Der maximal mögliche Förderstrom kann der Pumpe bspw. durch einen zuvor ausgeführten hydraulischen Abgleich der Heizungsanlage bekannt sein.

Die Definition des Startpunktes der Regelkurve kann entweder frei vom Nutzer definiert werden oder wird durch die Pumpe in Abhängigkeit des zuvor definierten Endpunktes bestimmt. Denkbar ist es, dass der Startpunkt einem definierten Bruchteil des Endpunktes entspricht. Beispielsweise liegt der Startpunkt bei etwa 0,5 des Endpunktes für eine gerade Regelkurve mit proportionaler Steigung und bei etwa 0,25 des Endpunktes bei einer quadratischen Kurvenfunktion der Regelkurve.

Ein weiterer Aspekt der Erfindung neben dem erfindungsgemäßen Verfahren betrifft eine Umwälzpumpe, insbesondere Heizungsumwälzpumpe, mit einer Pumpensteuerung, die zur Durchführung des erfindungsgemäßen Verfahrens konfiguriert ist. Damit ergeben sich für die Pumpe dieselben Vorteile und Eigenschaften wie sie bereits vorstehend anhand des erfindungsgemäßen Verfahrens diskutiert wurden. Auf eine wiederholende Beschreibung dieser Vorteile wird daher nachfolgend verzichtet und stattdessen auf das Vorstehende verwiesen.

Weitere Vorteile und Eigenschaften der Erfindung werden nachfolgend anhand von Ausführungsbeispielen und mit Hilfe von Zeichnungen näher erläutert. Es zeigen:

Figur 1: ein Q-H-Diagramm mit eingezeichneter beispielhafter Pumpenkurve, Anlagenkennlinie sowie unterschiedlichen Regelkurven,

Figur 2: zwei Q-H-Diagramme zur Verdeutlichung der Auswahl der theoretischen Anlagenkennlinie in Abhängigkeit der minimalen und maximalen Anlagenkennlinie;

Figur 3: Schematische Diagrammdarstellungen des Förderstroms, der Pumpendrehzahl sowie der Ventilstellung eines Thermostatventils über der Zeit während des Prozesses zur Ermittlung der minimalen Anlagenkennlinie;

Figur 4: ein weiteres Q-H-Diagramm zur Veranschaulichung der Berechnung der minimalen Anlagenkennlinie;

Figur 5: ein weiteres Q-H-Diagramm zur Veranschaulichung der Einstellung der Regelkurve und

Figur 6: eine Diagrammdarstellung des gemessenen Q-H-Verlaufs (normiert) über der Zeit während der Ausführung des Verfahrens in einem realen Gebäude.

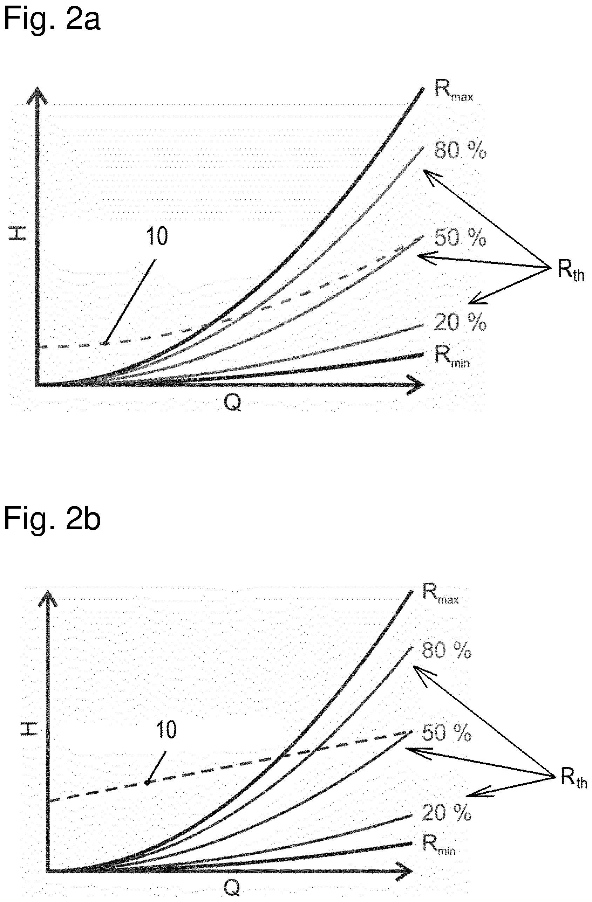

Der neuartige Ansatz dieser Erfindung besteht darin, dass der Anwender nicht direkt die Regelkurve einstellt, sondern festlegt, wie weit die Regelkurve von der minimalen ($R_{min}$) bzw. der maximalen Anlagenkennlinie $R_{max}$ entfernt ist (siehe Figuren 2a, 2b). Die Kurven $R_{th}$ kennzeichnen hier die vom Nutzer ausgewählten theoretischen Anlagenkennlinien, die für die Definition der Regelkurve verwendet werden sollen. Im Ausführungsbeispiel der Figur 2a ist hier als Betriebsart der Eco-Mode gewählt, bei dem die Regelkurve einen parabelförmigen Verlauf aufweist. Das Prinzip kann jedoch identisch für eine Proportionaldruckregelung (Figur 2b) oder auch eine Konstantdruckregelung zur Anwendung kommen.

Im Detail zeigt Figur 2a die minimale Anlagenkennlinie $R_{min}$ sowie die maximale Anlagenkennlinie $R_{max}$. Bei der maximalen Anlagenkennlinie sind alle Heizkörperventile geschlossen während die minimale Anlagenkennlinie eine Anlage mit vollständig geöffneten Heizkörperventilen beschreibt. Der Benutzer kann gemäß dieser Idee einen Sollwert, d.h. eine theoretische Anlagenkennlinie $R_{th}$ zwischen 0 % und 100 % einstellen.

Wählt der Anwender 0 %, so liegt die theoretische Anlagenkennlinie auf der minimalen Anlagenkennlinie $R_{min}$ und die kleinstmögliche Regelkurve, die niemals unter die minimale Anlagenkennlinie $R_{min}$ fällt, wird ausgewählt. Damit wäre der Energieverbrauch theoretisch am geringsten, allerdings besteht ein erhöhtes Risiko, dass Unterversorgung auftritt.

Wählt der Anwender 100 %, so fällt die theoretische Anlagenkennlinie auf die maximale Anlagenkennlinie $R_{max}$ und es wird die kleinstmögliche Regelkurve 10 gewählt, die niemals unter die maximale Anlagenkennlinie $R_{max}$ fällt. Dadurch wäre das Risiko der Unterversorgung am geringsten, allerdings wäre gleichzeitig der Energieverbrauch sehr hoch.

In Figur 2a dargestellt ist der Fall, dass der Benutzer den Sollwert auf 50 % stellt. In diesem Fall wird die kleinstmögliche Regelkurve 10 gewählt, die niemals unter die 50%-theoretische Anlagenkennlinie $R_{th}$ fällt, d.h. diejenige Anlagenkennlinie, die exakt zwischen der minimalen Anlagenkennlinie $R_{min}$ und der maximalen Anlagenkennlinie $R_{max}$ liegt. Konkret wird die Regelkurve durch den Endwert definiert, der sich durch den Schnittpunkt der 50%-theoretische Anlagenkennlinie $R_{th}$ mit der hier nicht dargestellten Pumpenkennlinie ergibt. Der Startwert der Regelkurve (Förderstrom = 0) liegt bei etwa 0,25 des Endwertes und es wird von einem parabelförmigen Kurvenverlauf ausgegangen.

Bei der Variante der Figur 2b wird anders als in Figur 2a stattdessen eine gerade Regelkurve mit proportionaler Steigung angenommen, deren Endwert identisch zu Figur 2a definiert ist und deren Startwert jedoch 0,5 (Förderstrom = 0) des Endwertes beträgt.

In der Praxis kann die Pumpensteuerung initial bspw. von einem sinnvollen Startwert für die theoretische Anlagenkennlinie $R_{th}$ ausgehen, bspw. 20 %. Der Anwender kann dann selbständig, wenn er Energie sparen möchte, auf einen niedrigeren Sollwert stellen. Stellt er eine Unterversorgung fest, so kann er den Sollwert wieder hochsetzen.

Der Unterschied zum bisherigen Verfahren, bei dem direkt die Regelkurve eingestellt wird, ist, dass mit dieser Idee nicht ein pumpenspezifischer Sollwert vorgegeben wird, sondern ein gebäudespezifischer Sollwert. Um diese Idee umsetzen zu können, muss die Pumpe die minimale und die maximale Anlagenkennlinie $R_{min}$, $R_{max}$ selbständig ermitteln. Die erwartete maximale Anlagenkennlinie $R_{max}$ kann ermittelt werden, indem die Pumpe für eine begrenzte Zeit auf eine hohe Pumpendrehzahl oder auf ihre maximale Pumpendrehzahl schaltet. Die Folge ist ein Ansteigen des Förderstroms Q. Um die Raumtemperatur nicht über Bedarf ansteigen zu lassen, werden die Thermostatventile der Heizungsanlage schließen und den Förderstrom Q eindrosseln. Wenn alle Thermostatventil geschlossen sind, liegt die maximale Anlagenkennlinie $R_{max}$ vor und der Förderstrom wird sich auf einen nahezu konstanten Wert einpendeln. Die Pumpe beobachtet also kontinuierlich den Verlauf des Förderstroms. Bleibt dieser Wert über einen bestimmten Zeitraum im Wesentlichen stabil, geht die Pumpensteuerung davon aus, dass nun die maximalen Anlagenkennlinie vorliegt. Durch gleichzeitige Erfassung des aktuellen Förderstroms und der dazugehörigen Förderhöhe kann die Pumpe nun die erwartete maximale Anlagenkennlinie $R_{max}$ berechnen.

Die Anlagenkennlinie R hat immer einen quadratischen Verlauf und lässt sich mathematisch wie folgt definieren:

$$\text{Förderhöhe} = \zeta \cdot \text{Förderstrom}^2 .$$

Die Kurve lässt sich folglich mit dem Parameter $\zeta$ beschreiben, der den hydraulischen Widerstandsbeiwert der Anlage bezeichnet. Diesen Parameter $\zeta$ berechnet die Pumpe anhand ihrer ermittelten Werte für den Förderstrom und die Förderhöhe gemäß:

$$\zeta = \frac{\text{Förderhöhe}}{\text{Förderstrom}^2} .$$

Theoretisch genügt es, wenn dieses Verfahren zur Ermittlung der erwarteten maximalen Anlagenkennlinie $R_{max}$ nach Inbetriebnahme der Pumpe einmalig ausgeführt wird. Es kann jedoch auch wiederholend im laufenden Pumpenbetrieb durchgeführt werden.

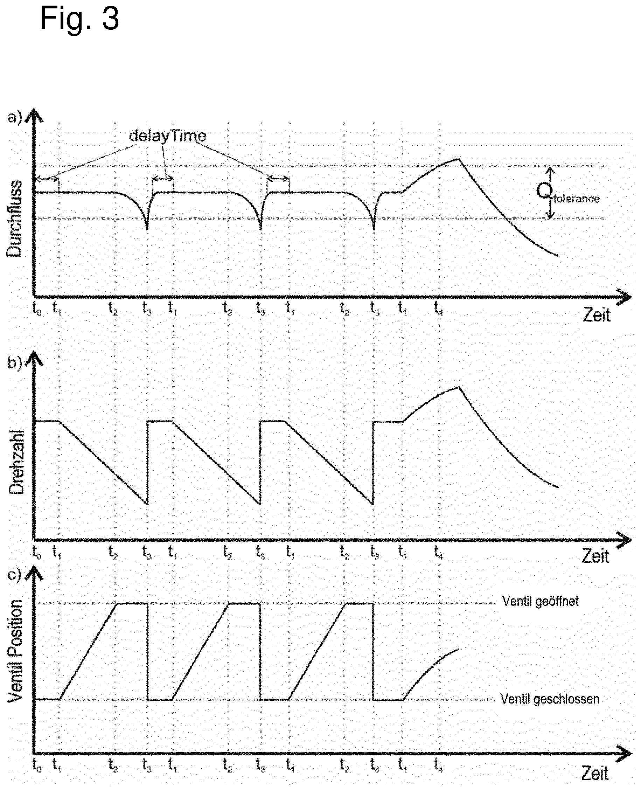

Für die Bestimmung der Regelkurve ist es zudem notwendig, die minimale Anlagenkennlinie $R_{min}$ hinreichend genau zu ermitteln. Es kann vorgesehen sein, dass die Pumpe bei Inbetriebnahme zunächst von einer initialen minimalen Anlagenkennlinie ausgeht, die entweder durch den Monteur eingegeben oder herstellerseitig in der Pumpensteuerung hinterlegt wird. Im laufenden Betrieb soll jedoch durch eine spezifische Prozedur zur Ermittlung der erwarteten minimalen Anlagenkennlinie eine genauere Anlagenkennlinie für die betriebene Anlage durch die Pumpe bestimmt werden. Die hierzu ausgeführte Prozedur lässt sich gut anhand der Figuren 3a-3c erläutern.

Nach dem Einschalten der Pumpe zum Zeitpunkt $t_0$ wird zunächst eine klassische Regelkurve eingesetzt (bspw. eine Regelkurve 3, 4, 5 gemäß Figur 1). Gleichzeitig beobachtet die Pumpe ihren Förderstrom Q und prüft, ob dieser innerhalb von konstanten Grenzen verbleibt. In der Praxis wird der Förderstrom Q niemals stabil auf einem konstanten Wert liegen, sondern gewisse Schwankungen erfahren, so dass hier stattdessen ein Toleranzkorridor $Q_{tolerance}$ definiert wird. Wenn der Förderstrom Q für eine bestimmte Dauer *delayTime* konstant bleibt, d.h. innerhalb des Korridors $Q_{tolerance}$ geblieben ist, wird der Betriebspunkt von der Pumpe als "stabil" bewertet. Ein sinnvoller Wert für die delayTime liegt bei etwa 2 Stunden. Diese Entscheidung erfolgt hier zum Zeitpunkt $t_1$.

Die Pumpe beginnt dann sehr langsam aber permanent ihre Drehzahl abzusenken (siehe Figur 3b). Als Folge dessen werden die Thermostatventile der Heizkörper der Anlage öffnen (vgl. Figur 3c), um dadurch ein Absinken der Raumtemperatur trotz zurückgenommener Pumpendrehzahl zu verhindern. Dadurch wird der Förderstrom zunächst im Wesentlichen konstant bzw. stabil bleiben. Sobald die Thermostatventile jedoch vollständig geöffnet sind, wie dies im Zeitpunkt $t_2$ eintritt, wird die Durchflussmenge Q zurückgehen (siehe Figur 3a). Die Pumpe erkennt dies und zeichnet nun den zeitlichen Verlauf des Förderstroms Q als auch der Förderhöhe H auf. Zum Zeitpunkt $t_3$ fällt der aktuelle Förderstrom aus dem Toleranzbereich $Q_{tolerance}$ heraus und die Pumpensteuerung erhöht ihre Drehzahl auf ihren ursprünglichen Wert und arbeitet wieder regulär nach der Regelkurve. Auf diese Weise ist sichergestellt, dass im Raum keine Unterversorgung auftreten kann.

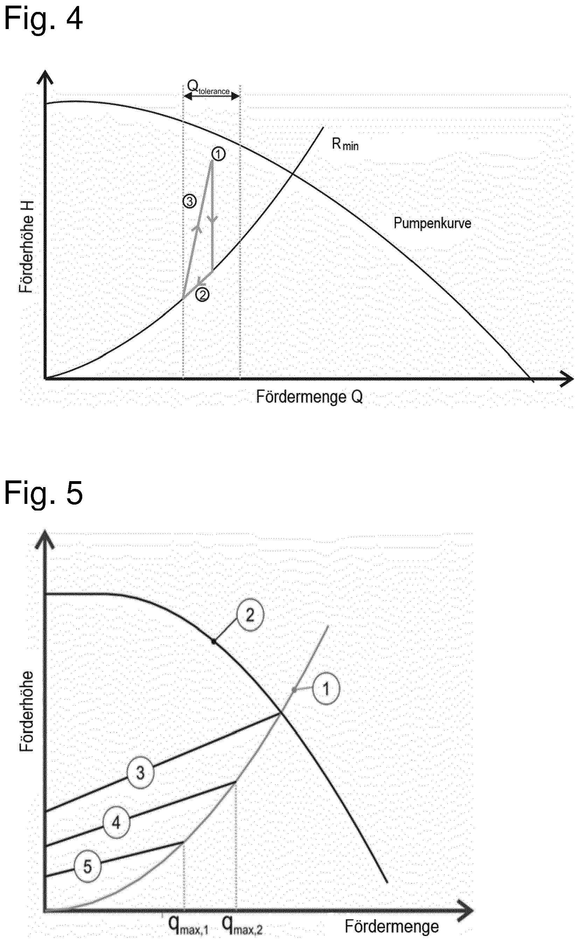

Betrachtet man insbesondere Figur 3c, so wird klar, dass zum Zeitpunkt $t_2$ die minimale Anlagenkennlinie $R_{min}$ vorliegt, denn ab diesem Zeitpunkt sind alle Thermostatventile vollständig geöffnet bzw. soweit wie möglich geöffnet. Ebenso ist klar, dass sich der Betriebspunkt der Pumpe ab dem Zeitpunkt $t_2$ auf der minimalen Anlagenkennlinie bewegt. Besser zu sehen ist dies in Figur 4, die den gleichen Ablauf wie in Figur 3 darstellt, allerdings nicht als zeitliche Abfolge, sondern im Förderstrom-Förderhöhen (Q-H)-Diagramm. Zusätzlich ist in der Figur 4 die minimalen Anlagenkennlinie $R_{min}$ eingezeichnet. Der Algorithmus startet in Punkt 1. Sobald ein stabiler Betriebspunkt erkannt wird beginnt die Pumpe mit der Reduzierung ihrer Drehzahl. Dadurch werden die Thermostatventile gezwungen weiter zu öffnen. Dadurch bleibt zwar der Förderstrom Q konstant, die resultierende Förderhöhe H der Pumpe fällt jedoch ab. Erreichen die Thermostatventile ihren maximalen Öffnungsgrad, so geht bei weiterer Drehzahlrücknahme auch die Fördermenge Q zurück. Der Betriebspunkt der Pumpe wandert somit auf der minimalen Anlagenkennlinie $R_{min}$ im Ab-

schnitt 2 nach links bis die Fördermenge Q aus dem Toleranzbereich $Q_{tolerance}$ herausfällt.

Die Pumpe kann also in diesem Zustand die Berechnung

$$\zeta = \frac{\text{Förderhöhe}}{\text{Förderstrom}^2}$$

mit Hilfe der aufgezeichneten Werte für die Förderhöhe H und die Fördermenge Q im Abschnitt 2 durchführen, um dadurch den hydraulischen Widerstandsbeiwert zu erhalten, mit dem sich die erwartete minimale Anlagenkennlinie $R_{min}$ vollständig beschreiben lässt.

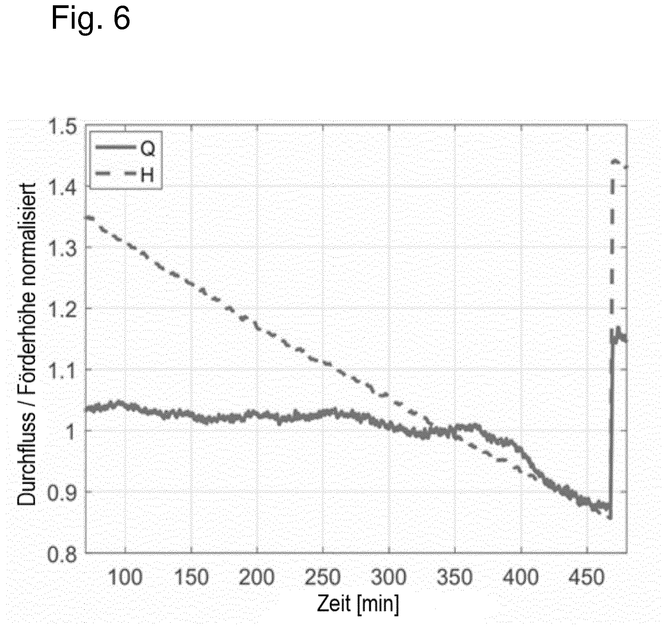

Figur 6 zeigt die Funktion des Verfahrens an einem realen Gebäude. Für diese Untersuchungen wurde das Verfahren in einer exemplarischen Pumpe integriert und damit ein Raum in einem realen Gebäude mit eigenem Heizkreis versorgt. Das Diagramm der Figur 6, das die normierte Förderhöhe H und den normierten Förderstrom Q gegenüber der Zeit darstellt, zeigt, dass die Förderhöhe H durch Verringerung der Drehzahl sehr langsam abgesenkt wird und der Förderstrom Q dennoch konstant bleibt, bis nach ca. 350 Minuten die Thermostatventile vollständig geöffnet sind. Bei weiterem Absinken der Förderhöhe H sinkt der Förderstrom Q ebenfalls ab. Der Algorithmus erkennt dies und kann anhand des Verlaufs von Förderhöhe H und Förderstrom Q die erwartete minimale Anlagenkennlinie bestimmen. Nach 470 Minuten springt die Drehzahl auf ihren ursprünglichen Wert zurück.

In Figur 5 ist eine Modifikation des Verfahrens gezeigt. Die Bestimmung der erwarteten minimalen und maximalen Anlagenkennlinie $R_{min}$, $R_{max}$ erfolgt hier analog, allerdings wird hier entgegen den Ausführungen zur Figur 2a, 2b der Endpunkt der Regelkurve nicht durch den Schnittpunkt der theoretische Anlagenkennlinie mit der Pumpenkennlinie definiert, sondern durch den maximal erforderlichen Förderstrom $q_{max,1}$, $q_{max,2}$ definiert, der der Pumpe bekannt ist.

In neuen Gebäuden wird häufig ein hydraulischer Abgleich durchgeführt. Wurden die hierfür erforderlichen Berechnungen durchgeführt, so ist dem Gebäudenutzer bekannt, welcher maximale Förderstrom $q_{max}$ auftreten kann. Mit diesem Wissen ist eine weitere Absenkung der Regelkurve möglich. Figur 5 zeigt die vom Nutzer eingestellte theoretische Anlagenkennlinie 1. Die Kurve 2 zeigt die Pumpenkurve, kennzeichnet also den maximalen Betriebsbereich der Pumpe.

Wird die Regelkurve nach herkömmlicher Art mit der Betriebsart Proportionaldruckregelung (gemäß Figur 2b) definiert, d.h. deren Endpunkt ergibt sich durch den Schnittpunkt der theoretischen Anlagenkennlinie 1 mit der Pumpenkennlinie 2 so erhält man die Regelkurve 3. Ist der Pumpe jedoch bekannt, dass der maximal mögliche Förderstrom durch die Heizungsanlage $q_{max,2}$ beträgt, so kann dieser Wert stattdessen für die Definition des Endpunktes der Regelkurve angesetzt werden. Die Regelkurve endet somit auf der theoretischen Anlagenkurve 1 beim Wert $q_{max,2}$ und man erhält die Regelkurve 4, die augenscheinlich unter der Regelkurve 3 und demzufolge näher an der Anlagenkennlinie 1 liegt. Beträgt der maximale Förderstrom $q_{max,1}$, führt dies zur Regelkurve 5. Die aufgezeigte Modifikation ermöglicht somit eine weitere Energieeinsparung.

Das erfindungsgemäße Verfahren wird am Beispiel eines Heizkreises erläutert, es lässt sich jedoch gleichermaßen für Kälteanwendungen einsetzen. Zudem sollte erwähnt werden, dass diese Anmeldung stets von einer minimalen und maximalen Anlagenkennlinie spricht. Die Pumpe wird jedoch in der Praxis nie die reale minimale oder maximale Kennlinie exakt sehen, da Thermostatventile nie komplett geöffnet bzw. geschlossen sein werden. Das ist für dieses Verfahren aber nicht relevant. Es reicht aus, wenn ein im Verhältnis sehr hoher oder sehr niedriger Anlagenwiderstand gesehen und ermittelt werden kann.

## Patentansprüche

1. Verfahren zur Regelung einer Umwälzpumpe mit variabler Drehzahl in einer hydraulischen Anlage, insbesondere in einer Heizungsanlage, mit den Verfahrensschritten:

   - Einstellen der Pumpendrehzahl in Abhängigkeit einer Regelkurve,
   - Ermitteln einer neuen erwarteten minimalen Anlagenkennlinie während des regulären Pumpenbetriebs und
   - Anpassen der Regelkurve in Abhängigkeit der neuen erwarteten minimalen Anlagenkennlinie

   **dadurch gekennzeichnet, dass** die initiale Regelkurve in Abhängigkeit einer initialen minimalen Anlagenkennlinie bestimmt wird, und dass die neue erwartete minimale Anlagenkennlinie durch folgende Schritte ermittelt wird:

   - Erkennen eines stationären Betriebspunktes mit im wesentlichen konstantem Förderstrom,
   - im Falle eines erkannten stationären Betriebspunktes kontinuierliches Absenken der Pumpendrehzahl bei gleichzeitiger Überwachung des Förderstroms der Pumpe und,
   - sobald eine Abnahme des Förderstroms festgestellt wird, Aufzeichnen des zeitlichen Verlaufs des Förderstroms und der Förderhöhe über einen bestimmten Zeitraum und/oder bis der Förderstrom unter einen definierten Grenzwert absinkt, und Berechnung der erwarteten minimalen Anlagenkennlinie aus dem aufgezeichneten Verlauf des Förderstroms und der Förderhöhe der Umwälzpumpe.

**2.** Verfahren nach Anspruch 1, **dadurch gekennzeichnet, dass** ein stationärer Betriebspunkt mit im Wesentlichen konstantem Förderstrom dann angenommen wird, wenn der Förderstrom innerhalb eines Toleranzbereiches verbleibt, insbesondere während eines definierbaren Zeitintervalls.

**3.** Verfahren nach einem der vorhergehenden Ansprüche, **dadurch gekennzeichnet, dass** die erwartete minimale Anlagenkennlinie während des Pumpenbetriebs wiederholend, insbesondere periodisch oder zufällig, und/oder situationsgesteuert ermittelt wird und eine Anpassung der Regelkurve dann erfolgt, wenn die neue erwartete minimale Anlagenkennlinie unterhalb der bislang für die Einstellung der Regelkurve verwendeten initialen oder erwarteten minimalen Anlagenkennlinie liegt.

**4.** Verfahren nach Anspruch 3, **dadurch gekennzeichnet, dass** die Ermittlung der erwarteten minimalen Anlagenkennlinie situationsbedingt unter Berücksichtigung einer geeigneten Temperatur des Fördermediums ausgelöst wird, insbesondere bei höheren Temperaturen des Fördermediums, die auf eine aktuelle Heizperiode schliessen lassen.

**5.** Verfahren nach einem der vorhergehenden Ansprüche, **dadurch gekennzeichnet, dass** die Regelkurve in Abhängigkeit der erwarteten minimalen und einer erwarteten maximalen Anlagenkennlinie bestimmt wird.

**6.** Verfahren nach Anspruch 5, **dadurch gekennzeichnet, dass** die Pumpe die erwartete maximale Anlagenkennlinie dadurch ermittelt, indem die Pumpe mit maximaler oder definierbar hoher Drehzahl unter Beobachtung des Förderstroms der Pumpe betrieben wird, wobei die Pumpe prüft, ob der überwachte aktuelle Förderstrom über einen Zeitraum konstant oder nahezu konstant bleibt und im Falle eines konstanten Förderstroms aus dem aktuellen Förderstrom und der aktuellen Förderhöhe die erwartete maximale Anlagenkennlinie berechnet.

**7.** Verfahren nach einem der vorhergehenden Ansprüche, **dadurch gekennzeichnet, dass** die Regelkurve durch eine auswählbare Betriebsart und einen Start- und Endpunkt definiert ist, wobei der Endpunkt durch den Schnittpunkt der Pumpenkurve bei maximaler Drehzahl und einer vom Nutzer einstellbaren theoretischen Anlagenkennlinie bestimmt wird, und der Nutzer die theoretische Anlagenkennlinie durch den gewünschten Abstand zur erwarteten minimalen und/oder erwarteten maximalen Anlagenkennlinie einstellen kann.

**8.** Verfahren nach einem der vorhergehenden Ansprüche, **dadurch gekennzeichnet, dass** die Regelkurve durch eine auswählbare Betriebsart und einen Start- und Endpunkt definiert ist, wobei der Endpunkt auf einer vom Nutzer einstellbaren theoretischen Anlagenkennlinie im Bereich eines der Pumpe bekannten maximalen Förderstroms der hydraulischen Anlage liegt, und der Nutzer die theoretische Anlagenkennlinie durch den gewünschten Abstand zur erwarteten minimalen und/oder erwarteten maximalen Anlagenkennlinie einstellen kann.

**9.** Verfahren nach Anspruch 7 oder 8, **dadurch gekennzeichnet, dass** durch die auswählbare Betriebsart festgelegt wird, ob die Regelkurve einen proportional ansteigenden, konstanten oder quadratischen Kurvenverlauf hat.

**10.** Verfahren nach Anspruch 7, 8 oder 9, **dadurch gekennzeichnet, dass** der Startpunkt einem definierbaren Bruchteil des Endwertes entspricht, beispielsweise 0,5 bei einer proportional ansteigenden Regelkurve und 0,25 bei einer quadratisch ansteigenden Regelkurve.

**11.** Umwälzpumpe, insbesondere Heizungsumwälzpumpe, mit einer Pumpensteuerung die zur Durchführung des Verfahrens gemäß einem der vorhergehenden Ansprüche eingerichtet ist.

**Claims**

**1.** Method for controlling a circulation pump with variable speed in a hydraulic system, in particular in a heating system, having the method steps:

- adjusting the pump speed as a function of a control curve,
- establishing a new expected minimum system characteristic during regular pump operation and
- adapting the control curve as a function of the new expected minimum system characteristic,

**characterized in that** the initial control curve is determined as a function of an initial minimum system characteristic, and **in that** the new expected minimum system characteristic is established by the following steps:

- identifying a steady-state operating point with a substantially constant delivery rate,
- in the case of an identified steady-state operating point, continuously lowering the pump speed while the delivery rate of the pump is simultaneously monitored and,
- as soon as a decline in the delivery rate is identified, recording the time profile of the delivery rate and the delivery head over a specific period and/or until the delivery rate is below a defined limit value, and calculating the expected minimum system characteristic from the recorded course of the delivery rate and the delivery head of the circulation pump.

2.  Method according to Claim 1, **characterized in that** a steady-state operating point with a substantially constant delivery rate is assumed when the delivery rate remains within a tolerance range, in particular over a definable time interval.

3.  Method according to one of the preceding claims, **characterized in that** the expected minimum system characteristic is established repeatedly, in particular periodically or randomly, and/or on a situational basis during pump operation and the control curve is adapted when the new expected minimum system characteristic is below the initial or expected minimum system characteristic previously used for setting the control curve.

4.  Method according to Claim 3, **characterized in that** establishment of the expected minimum system characteristic is initiated on a situational basis taking account of a suitable temperature of the delivery medium, in particular at relatively high temperatures of the delivery medium, which are indicative of a current heating period.

5.  Method according to one of the preceding claims, **characterized in that** the control curve is determined as a function of the expected minimum and an expected maximum system characteristic.

6.  Method according to Claim 5, **characterized in that** the pump establishes the expected maximum system characteristic by the pump being operated at the maximum or a definable high speed while the pump's delivery rate is observed, the pump checking whether the monitored current delivery rate remains constant or virtually constant over a period of time and, in the event of a constant delivery rate, calculating the expected maximum system characteristic from the current delivery rate and the current delivery head.

7.  Method according to one of the preceding claims, **characterized in that** the control curve is defined by a selectable operating mode and a starting point and an end point, the end point being determined by the intersection of the pump curve at maximum speed and a theoretical system characteristic settable by the user, and the user being able to set the theoretical system characteristic by the desired distance from the expected minimum and/or expected maximum system characteristic.

8.  Method according to one of the preceding claims, **characterized in that** the control curve is defined by a selectable operating mode and a starting point and an end point, the end point being located on a theoretical system characteristic settable by the user in the region of a maximum delivery rate of the hydraulic system known to the pump, and the user being able to set the theoretical system characteristic by the desired distance from the expected minimum and/or expected maximum system characteristic.

9.  Method according to Claim 7 or 8, **characterized in that** the selectable operating mode defines whether the control curve has a proportionally rising, constant or quadratic curve profile.

10. Method according to Claim 7, 8 or 9, **characterized in that** the starting point corresponds to a definable fraction of the end value, for example 0.5 in the case of a proportionally rising control curve and 0.25 in the case of a quadratically rising control curve.

11. Circulation pump, in particular heating circulation pump, with a pump controller which is designed for carrying out the method according to one of the preceding claims.

**Revendications**

1.  Procédé pour réguler une pompe de circulation à vitesse variable dans une installation hydraulique, en particulier dans une installation de chauffage, comprenant les étapes consistant à :

    - régler la vitesse de la pompe en fonction d'une courbe de régulation,
    - déterminer une nouvelle courbe caractéristique minimale attendue de l'installation pendant le fonctionnement régulier de la pompe et
    - adapter la courbe de régulation en fonction de la nouvelle courbe caractéristique minimale attendue de l'installation

    **caractérisé en ce que** la courbe de régulation initiale est déterminée en fonction d'une courbe caractéristique minimale initiale de l'installation, et **en ce que** la nouvelle courbe caractéristique minimale attendue de l'installation est déterminée par les étapes consistant à :

    - détecter un point de fonctionnement stationnaire correspondant à un débit sensiblement constant,
    - en cas de détection d'un point de fonctionnement stationnaire, réduire en continu de la vitesse de rotation de la pompe en surveillant simultanément le débit de la pompe et,

- dès qu'une diminution du débit est constatée, enregistrer l'évolution dans le temps du débit et de la hauteur de refoulement au cours d'une période déterminée et/ou jusqu'à ce que le débit s'abaisse en dessous d'une valeur limite définie, et calculer la courbe caractéristique minimale attendue de l'installation à partir de l'évolution enregistrée du débit et de la hauteur de refoulement de la pompe de circulation.

2. Procédé selon la revendication 1, **caractérisé en ce qu'**un point de fonctionnement stationnaire correspondant à un débit sensiblement constant est supposé lorsque le débit reste à l'intérieur d'une plage de tolérance, en particulier pendant un intervalle de temps définissable.

3. Procédé selon l'une quelconque des revendications précédentes, **caractérisé en ce que** la courbe caractéristique minimale attendue de l'installation est déterminée de manière répétée, en particulier périodiquement ou aléatoirement, et/ou en fonction de la situation pendant le fonctionnement de la pompe, et **en ce qu'**une adaptation de la courbe de régulation est effectuée lorsque la nouvelle courbe caractéristique minimale attendue de l'installation se situe en dessous de la courbe caractéristique initiale ou minimale attendue de l'installation utilisée jusqu'alors pour le réglage de la courbe de régulation.

4. Procédé selon la revendication 3, **caractérisé en ce que** la détermination de la courbe caractéristique minimale attendue de l'installation est déclenchée en tenant compte d'une température appropriée du fluide transporté, en particulier lorsque les températures du fluide transporté sont élevées, ce qui indique une période de chauffage en cours.

5. Procédé selon l'une quelconque des revendications précédentes, **caractérisé en ce que** la courbe de régulation est déterminée en fonction de la courbe caractéristique minimale attendue et d'une courbe caractéristique maximale attendue de l'installation.

6. Procédé selon la revendication 5, **caractérisé en ce que** la pompe détermine la courbe caractéristique maximale attendue de l'installation en faisant en sorte que la pompe fonctionne à une vitesse de rotation maximale ou à une vitesse de rotation élevée définissable tout en observant le débit de la pompe, la pompe vérifiant si le débit actuel surveillé reste constant ou presque constant sur une période donnée et, dans le cas d'un débit constant, en calculant la courbe caractéristique maximale attendue de l'installation à partir du débit actuel et de la hauteur de refoulement actuelle.

7. Procédé selon l'une quelconque des revendications précédentes, **caractérisé en ce que** la courbe de régulation est définie par un mode de fonctionnement sélectionnable et un point de départ et un point final, le point final étant déterminé par l'intersection de la courbe de la pompe à la vitesse maximale et d'une courbe caractéristique théorique de l'installation, réglable par l'utilisateur, et l'utilisateur pouvant régler la courbe caractéristique théorique de l'installation en fonction de l'écart souhaité par rapport à la courbe caractéristique minimale et/ou maximale attendue de l'installation.

8. Procédé selon l'une quelconque des revendications précédentes, **caractérisé en ce que** la courbe de régulation est définie par un mode de fonctionnement sélectionnable et un point de départ et un point final, le point final étant situé sur une courbe caractéristique théorique de l'installation, réglable par l'utilisateur, dans la zone du débit maximal de l'installation hydraulique, connu de la pompe, et l'utilisateur pouvant régler la courbe caractéristique théorique de l'installation en fonction de l'écart souhaité par rapport à la courbe caractéristique minimale et/ou maximale attendue de l'installation.

9. Procédé selon la revendication 7 ou 8, **caractérisé en ce que** le mode de fonctionnement sélectionnable détermine si la courbe de régulation présente une forme de courbe proportionnelle croissante, constante ou quadratique.

10. Procédé selon la revendication 7, 8 ou 9, **caractérisé en ce que** le point de départ correspond à une fraction définissable de la valeur finale, par exemple de 0,5 pour une courbe de régulation à croissance proportionnelle et de 0,25 pour une courbe de régulation à croissance quadratique.

11. Pompe de circulation, en particulier pompe de circulation de chauffage, comprenant une commande de pompe qui est conçue pour mettre en œuvre le procédé selon l'une quelconque des revendications précédentes.

Fig. 1

Fig. 2a

Fig. 2b

# Fig. 3

# Fig. 4

# Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1323986 A1

- DE 19525887 A1